# EUROPÄISCHE PATENTSCHRIFT

(11) **EP 3 999 716 B1**
(45) Veröffentlichungstag und Bekanntmachung des Hinweises auf die Patenterteilung: **04.09.2024**
(21) Anmeldenummer: 20753279.7
(22) Anmeldetag: 14.07.2020
(51) Int. Cl.: F01D 5/14, F01D 5/28

(54) **LAUFSCHAUFEL FÜR EINE STRÖMUNGSMASCHINE, ZUGEHÖRIGES TURBINENMODUL UND VERWENDUNG DERSELBEN**
ROTOR BLADE FOR A TURBOMACHINE, CORRESPONDING TURBINE MODULE AND USE OF THE SAME
AUBE DE ROTOR POUR UNE TURBOMACHINE, MODULE DE TURBINE ASSOCIÉ ET UTILISATION DES MÊMES

(30) Priorität: 19.07.2019 DE 102019210693
(43) Veröffentlichungstag der Anmeldung: 25.05.2022
(73) Patentinhaber: MTU Aero Engines AG, 80995 München (DE)
(72) Erfinder: MAAR, Karl, 80995 München (DE); FRISCHBIER, Jörg, 80995 München (DE); HACKENBERG, Hans-Peter, 80995 München (DE)
(86) Internationale Anmeldenummer: PCT/DE2020/000155
(87) Internationale Veröffentlichungsnummer: WO 2021/013281

(56) Entgegenhaltungen:
- EP-A1- 3 314 093
- EP-A2- 0 618 310
- WO-A1-2015/126824
- DE-A1- 102015 103 951
- US-A- 4 682 935

## Beschreibung

### Technisches Gebiet

Die vorliegende Erfindung betrifft eine Laufschaufel für eine Strömungsmaschine.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Die Turbine ist in der Regel aus mehreren Stufen mit jeweils einem Stator (Leitschaufelkranz) und einem Rotor (Laufschaufelkranz) aufgebaut, die Rotoren werden von dem Heißgas angetrieben. In jeder Stufe wird dem Heißgas dabei anteilig innere Energie entzogen, die in eine Bewegung des jeweiligen Laufschaufelkranzes und damit der Welle umgesetzt wird.

Die DE 10 2015 103 951 A1 betrifft ein Schaufelblatt, das zur Dämpfung in einem radial mittigen Bereich über ein Teilspannweitendeckband mit einem benachbarten Schaufelblatt verbunden ist, wobei im Bereich des Teilspannweitendeckbands die Sehnenlänge des Schaufelblatts aus aerodynamischen Gründen vergrößert ist.

Aus der WO 2015/126824 A1 ist ein Fan-Schaufelblatt bekannt, dessen Sehnenlänge über die Schaufelblatthöhe variiert. Dabei liegt ein relatives oder absolutes Maximum in einem radial mittigen Bereich und fällt die Sehnenlänge nach radial innen deutlich ab.

Die US 4,682,935 A betrifft ein Schaufelblatt, das zur Einstellung einer Biegespannung mit einer Druckkomponente in einem hinsichtlich der HCF-/LCF- bzw. Kriechfestigkeit kritischen Bereich zur Saugseite hin geneigt ist.

Die EP 3 314 093 A1 betrifft ein aktiv gekühltes Schaufelblatt.

Die EP 0 618 310 A2 betrifft ein Schaufelblatt, dessen Vorderkante mit einer durch Plasmaspritzen oder Pulverbeschichtung aufgebrachten Schutzschicht versehen ist.

Der vorliegende Gegenstand betrifft eine Laufschaufel zum Anordnen im Gaskanal der Strömungsmaschine. Die Laufschaufel kann im Allgemeinen auch im Verdichterbereich Anwendung finden, also im Verdichtergaskanal angeordnet werden; bevorzugt ist eine Anwendung im Turbinenbereich, wird sie also im Heißgaskanal platziert.

### Darstellung der Erfindung

Der vorliegenden Erfindung liegt das technische Problem zugrunde, eine besonders vorteilhafte Laufschaufel anzugeben.

Dies wird erfindungsgemäß mit der Laufschaufel gemäß Anspruch 1 gelöst. Deren Laufschaufelblatt hat radial innen eine Sehnenlänge Sᵢ und radial außen eine Sehnenlänge Sₐ, sowie radial dazwischen, auf einer Radialposition rₓ eine Sehnenlänge Sₓ. Dabei nimmt die Sehnenlänge einerseits nach radial außen ab (Sᵢ ≤ Sₓ), hat sie jedoch andererseits nicht über die gesamte Laufschaufelblatthöhe einen solchen Verlauf. Von der Radialposition rₓ nach radial innen bleibt die Sehnenlänge nämlich entweder konstant, oder sie nimmt sogar ab (Sᵢ ≤ Sₓ). Zusammengefasst ergibt sich damit von radial innen nach radial außen in einem radial inneren Abschnitt zunächst eine leicht zunehmende Sehnenlänge und nimmt die Sehnenlänge dann in einem radial äußeren Abschnitt ab.

Die kleinere Sehnenlänge Sₐ radial außen kann bspw. dahingehend von Vorteil sein, dass sich damit die Randlast verringern lässt, also vereinfacht gesprochen die Masse, die infolge der Rotation nach außen zieht. Damit können in dem radial äußeren Abschnitt fliehkraftbedingte Spannungen verringert werden, was die Robustheit bzw. Impact-Toleranz des Schaufelblatts erhöhen kann. Da das Schaufelblattmaterial weniger verspannt ist, führt erst ein Impact höherer Energie zu einer kritischen Materialschädigung. Die Erfinder haben jedoch andererseits auch festgestellt, dass die Häufigkeit von Einschlägen und die Impact-Belastung, die sich aus der Geschwindigkeit und Masse ergibt, radial nicht gleich verteilt sind. Die Belastung ist nämlich radial innen geringer, es ist dort also umgekehrt ein höheres Spannungsniveau akzeptabel (weil es innen weniger Teilcheneinschläge mit zudem geringerer Geschwindigkeit als außen gibt).

Dies wird mit der hauptanspruchsgemäß in dem radial inneren Abschnitt nach innen abnehmenden Sehnenlänge genutzt. Damit lassen sich in der Gesamtschau trotz einer erhöhten Impact-Toleranz des Schaufelblatts besonders große axiale Längen vermeiden. Dies kann bspw. das Gewicht und den Platzbedarf betreffend von Vorteil sein, es kann bspw. auch das entsprechende Turbinenmodul axial kompakter gebaut werden. Zusammengefasst geht die erhöhte Robustheit damit nicht auf Kosten der Effizienz, jedenfalls nicht wesentlich.

Bevorzugte Ausführungsformen finden sich in den abhängigen Ansprüchen und der gesamten Offenbarung, wobei in der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Werden bspw. die Vorteile der Laufschaufel in einer bestimmten Anwendung beschrieben, ist dies als Offenbarung sowohl der entsprechend ausgelegten Laufschaufel als auch einer solchen Verwendung zu lesen.

Die Angaben "axial", "radial" und "umlaufend", sowie die zugehörigen Richtungen (Axialrichtung etc.) beziehen sich auf die Drehachse, um welche die Laufschaufel im Betrieb rotiert. Diese fällt typischerweise mit einer Längsachse des Triebwerks bzw. Triebwerkmoduls zusammen. Wie nachstehend im Einzelnen dargelegt, findet die Laufschaufel bevorzugt in einem schnelllaufenden Turbinenmodul Anwendung, wo die designtechnisch erhöhte Impact-Toleranz z. B. den Einsatz hochtemperaturfester und damit aber vielfach vergleichsweise spröder Materialien ermöglichen kann.

Die Sehnenlänge wird jeweils in einem Tangentialschnitt durch das Schaufelblatt betrachtet, also tangential auf der entsprechenden radialen Höhe (z. B. radial innen oder außen bzw. dazwischen). Im Einzelnen wird die Länge dann entlang einer in dem Schnitt druckseitig an das Profil gelegten Verbindungstangente genommen, die das Schaufelblatt nicht schneidet und zwei Berührungspunkte mit dem Schaufelblatt hat (im Bereich der Vorder- und im Bereich der Hinterkante). Die Sehnenlänge ergibt sich dann entlang dieser Verbindungstangenten als Abstand zwischen einer vorderen und einer hinteren Tangente, wobei die vordere und die hintere Tangente jeweils senkrecht zur Verbindungstangente liegen und das Schaufelblatt vorne (vordere Tangente) und hinten (hintere Tangente) berühren (und nicht schneiden).

Die Sehnenlänge S; radial innen wird in einem Tangentialschnitt unmittelbar oberhalb des Schaufelfußes bzw. Innendeckbands genommen, und die äußere Sehnenlänge Sₐ unmittelbar unterhalb des Außendeckbands. Bezogen auf eine von radial innen nach radial außen genommene Laufschaufelblatthöhe wird die Sehnenlänge S; radial innen bei 0 % und die Sehnenlänge Sₐ radial außen bei 100 % der Laufschaufelblatthöhe genommen, wobei insbesondere ein sog. "Fillet", d.h. ein Materialübergang vom Schaufelblatt zum jeweiligen Deckband in Form eines Ausrundungsradius, unberücksichtigt bleibt. D.h. die Sehnenlängen Sₐ und Sᵢ werden insbesondere entweder ohne Fillet "genommen" und entsprechen dabei der jeweiligen extrapolierten Sehnenlänge, die von unmittelbar unterhalb bzw. unmittelbar oberhalb des jeweiligen Fillets linear auf 0% bzw. auf 100% der Laufschaufelblatthöhe extrapoliert ist. Alternativ können die Sehnenlängen Sₐ und Sᵢ direkt radial unterhalb angrenzend bzw. oberhalb angrenzend an das Fillet genommen werden. In der vorliegenden Offenbarung können die Sehnenlängen Sₐ und Sᵢ jeweils eine Sehnenlänge umfassen, die auf die eine oder die andere dieser beiden Arten bestimmt wird.

Die Radialposition rₓ mit der Sehnenlänge Sₓ liegt in bevorzugter Ausgestaltung bei mindestens 20 % und höchstens 50 % der von radial innen nach außen genommenen Laufschaufelblatthöhe. Mit dieser Positionierung kann eine besonders gute Anpassung an die von den Erfindern beobachtete radiale Verteilung der Impact-Belastung möglich sein.

Der radiale Bereich eines radial inneren und/oder äußeren Fillets kann in einigen Ausführungsformen im Bereich von 2% bis 5%, im Bereich von 2,5% bis 4% oder im Bereich von 3% bis 3,5% liegen.

Erfindungsgemäß entspricht die Sehnenlänge S; radial innen mindestens dem 0,9-Fachen der Sehnenlänge Sₓ auf der Radialposition rₓ dazwischen (Sᵢ ≥ 0,9 Sₓ). Vereinfacht gesprochen soll die Sehnenlänge nach radial innen also allenfalls leicht abnehmen (im Vergleich zu der Abnahme nach radial außen).

In bevorzugter Ausgestaltung entspricht die Sehnenlänge Sₐ radial außen mindestens dem 0,7-Fachen der Sehnenlänge Sₓ auf der Radialposition rₓ. Die Sehnenlänge Sₐ radial außen liegt also bevorzugt in einem Intervall von 0,7 Sₓ bis 0,9 Sₓ (0,7 Sₓ ≤ Sₐ ≤ 0,9 Sₓ).

Die folgenden Ausführungsformen betreffen den radialen Verlauf der Sehnenlänge, es wird also die Sehnenlänge als Funktion des Radius betrachtet, S(r). Ausgangspunkt ist hierbei jeweils die Radialposition rₓ dazwischen, von dort wird zum einen der Verlauf nach radial außen betrachtet, also von Sₓ zu Sₐ. Zum anderen wird von dort der Verlauf nach radial innen betrachtet, also von Sₓ zu Sᵢ.

Erfindungsgemäß ist eine monotone Abnahme von Sₓ zu Si vorgesehen, bevorzugt zusätzlich auch eine monotone Abnahme von Sₓ zu Sₐ. Infolge der monotonen Abnahme gibt es also von Sₓ zu Sₐ (radial äußerer Abschnitt) bzw. von Sₓ zu Sᵢ (radial innerer Abschnitt) jeweils keine Werte die größer als Sₓ sind. In anderen Worten bleibt die Sehnenlänge S von der Radialposition rₓ mit Sₓ nach radial außen und/oder nach radial innen allenfalls abschnittsweise konstant oder nimmt sie ab, nimmt sie jedoch nicht zu. Sₓ entspricht somit der maximalen Sehnenlänge des Laufschaufelblatts.

Bevorzugt nimmt die Sehnenlänge in dem radial äußeren Abschnitt von Sₓ zu Sₐ streng monoton ab und/oder nimmt sie in dem radial inneren Abschnitt von Sₓ zu Sᵢ streng monoton ab. Die Sehnenlänge bleibt also in anderen Worten nicht über mehrere Radialpositionen hinweg konstant.

Gemäß einer bevorzugten Ausführungsform ist die Steigung hierbei konstant, nimmt die Sehnenlänge also nach radial außen (im radial äußeren Abschnitt) und/oder nach radial innen (im radial inneren Abschnitt) mit einem linearen Verlauf ab. Die Steigungen in dem radial inneren und dem radial äußeren Abschnitt können sich dabei durchaus unterscheiden, bevorzugt ist sie im radial äußeren Abschnitt größer.

Gemäß einer alternativ bevorzugten Ausführungsform wird die Abnahme der Sehnenlänge nach radial außen (im radial äußeren Abschnitt) und/oder nach radial innen (im radial inneren Abschnitt) von der Radialposition rₓ weg größer. Die Steigung dS/dr nimmt also von der Radialposition rₓ weg nach außen bzw. nach innen zu. Betrachtet man das Schaufelblatt insgesamt, kann ein solcher Verlauf auch mit einem linearen Verlauf kombiniert werden, kann die Sehnenlänge also bspw. in dem radial äußeren Abschnitt nach außen mit zunehmender Steigung abnehmen, in dem radial inneren Abschnitt jedoch eine konstante Steigung haben, oder umgekehrt (nach radial außen konstant, nach innen zunehmend).

Gemäß einer bevorzugten Ausführungsform ist das Laufschaufelblatt zumindest abschnittsweise zur Saugseite hin geneigt. Diese Neigung ist dabei so eingestellt, dass das im Betrieb resultierende Moment der Fliehkraft größer als das der Gaskraft ist, letzteres also überkompensiert wird. Das auf das Laufschaufelblatt wirkende Fliehkraft-Biegemoment ist damit größer als das Gaskraft-Biegemoment, vereinfacht gesprochen wird das Laufschaufelblatt im Betrieb fliehkraftgetrieben zu der Druckseite hin gebogen. Dies erhöht die Belastung saugseitig, auf der Druckseite und an Ein- und Austrittskante nimmt sie hingegen ab. Durch die gezielte Vorspannung des Laufschaufelblatts lässt sich im Betrieb die relative Spannung druckseitig und wegen der Profilwölbung auch an der Vorderkante verringern, was die Impact-Toleranz erhöht, also die Widerstandsfähigkeit gegen Fremdpartikeleinschlag. Aufgrund der Entlastung an der Vorderkante, weil das Laufschaufelblattmaterial dort im Betrieb weniger verspannt ist (die relative Spannung kann bspw. um bis zu 20 % reduziert sein), führt erst ein Impact höherer Energie zu einer kritischen Materialschädigung.

Bevorzugt kann eine radial variable Neigung des Laufschaufelblatts sein. Dieses kann bspw. zwischen 20 % und 60 % der Laufschaufelblatthöhe (von radial innen nach außen genommen) stärker geneigt sein als radial innerhalb davon (zwischen 0 % und 20 %) und/oder als radial außerhalb davon (zwischen 60 % und 100 %). Bevorzugt kann ein Verlauf der Neigung derart sein, dass diese von radial innen nach radial außen zunächst zunimmt, dann zwischen 20 % und 60 % der Laufschaufelblatthöhe ein Maximum erreicht und anschließend nach radial außen wieder abnimmt. Mit der radial variablen Neigung lassen sich hinsichtlich der Impact-Gefährdung kritische Bereiche gezielt entlasten.

Gemäß einer bevorzugten Ausführungsform ist das Außendeckband der Laufschaufel mit nur einem einzigen Dichtfin ausgeführt. Dieser Dichtfin, auch als Dichtspitze bezeichnet, kann im Betrieb mit einer nach radial innen gewandten Dichtstruktur zusammenwirken, die relativ zum Gehäuse ruht. Der Dichtfin kann in die Dichtstruktur, bspw. eine Honigwabenstruktur, ein Stück weit einlaufen, was dann insgesamt eine gute Abdichtung in Axialrichtung ergeben kann. Im Hinblick auf die Dichtwirkung kann die Beschränkung auf einen einzigen Dichtfin einen gewissen Nachteil bedeuten, die damit einhergehende Gewichtsreduktion kann jedoch aufgrund der verringerten Randlast von Vorteil sein, vgl. die vorstehenden Anmerkungen. Zur Illustration, wird das Gewicht des Außendeckbands bspw. auf höchstens 7 g pro Laufschaufel verringert, kann sich damit bspw. in allen Profilschnitten des Schaufelprofils eine statische Mittelspannung von höchstens 150 MPa einstellen lassen.

Gemäß einer bevorzugten Ausführungsform ist das Laufschaufelblatt aus einem hochtemperaturfesten Werkstoff vorgesehen. "Hochtemperaturfest" kann bspw. eine Eignung für Temperaturen bis mindestens 700 °C oder sogar 800 °C meinen, wobei eine solche Hochtemperaturfestigkeit i.d.R. mit einer geringeren Duktilität einhergeht. Diese ergibt eine höhere Impact-Anfälligkeit, welcher mit der bzw. den vorliegend beschriebenen Maßnahmen begegnet wird. Dabei sind auch Modifikationen der Mikrostruktur möglich, um die Duktilität des spröden Werkstoffs zu erhöhen.

Bei dem hochtemperaturfesten Werkstoff kann es sich insbesondere um Titanaluminid handeln, vorzugsweise einen intermetallischen TiAl-Werkstoff bzw. eine TiAl-Legierung. Hierunter werden im Rahmen der vorliegenden Erfindung Werkstoffe verstanden, die als Hauptbestandteile Titan und Aluminium aufweisen, sowie intermetallische Phasen, z. B. Ti3Al, γ-TiAl. Das Schaufelblatt bzw. die Schaufel kann insbesondere aus einer TNM-Legierung vorgesehen sein (Titan, Niob Molybdän, bspw. 43,5 at. % Al, 4 at. % Nb, 1 at. % Mo und 0,1 at. % Bor, den Rest bilden Titan bzw. unvermeidbare Verunreinigungen).

Das Laufschaufelblatt, vorzugsweise die Laufschaufel insgesamt, kann bspw. durch Gießen, Schmieden und/oder generative Fertigung sowie Endkonturfräsen hergestellt werden (insbesondere aus dem hochtemperaturfesten Werkstoff). Zusätzlich zu dem Laufschaufelblatt und dem bereits erwähnten Außendeckband kann die Laufschaufel bspw. einen Laufschaufelfuß aufweisen, der in einer Rotorscheibe montiert werden kann. Die Laufschaufel kann auch mit einer weiteren oder mehreren Laufschaufeln zu einem integralen Mehrfachsegment zusammengefasst sein, ebenso kann sie Teil eines Blisk sein (Blade Integrated Disk).

Bei einer bevorzugten Ausführungsform ist das Laufschaufelblatt zumindest an der Vorderkante mit einer Beschichtung versehen. Die Beschichtung kann lokal die Vorderkante und gegebenenfalls die Hinterkante bedecken, das Laufschaufelblatt kann aber auch vollständig beschichtet sein (Vollpanzerung).

In bevorzugter Ausgestaltung ist die Beschichtung als Mehrschichtsystem ausgeführt, also aus mindestens zwei aufeinandergelegten Schichten aufgebaut. Vorteilhaft kann die Kombination einer spröden und einer duktilen Schicht sein, wobei bevorzugt das duktile Material innen und das spröde Material darauf angeordnet wird. Das spröde Material kann bei einem Einschlag zerspringen, was einen Teil der Impact-Energie verbraucht. Mit dem duktilen Material darunter, das vorzugsweise direkt auf das Laufschaufelblatt aufgebracht ist, kann einem Risswachstum in den Schaufelwerkstoff hinein vorgebeugt werden (die Risskeime liegen im spröden Material). In bevorzugter Ausgestaltung ist das spröde Material ein keramischer Werkstoff und/oder ist das duktile Material ein metallischer Werkstoff.

In bevorzugter Ausgestaltung ist die Laufschaufel für einen schnelllaufenden Rotor, insbesondere eines schnelllaufenden Turbinenmoduls ausgelegt. Als "schnelllaufend" werden dabei Werte von An² von mindestens 2000 m²/s² betrachtet, in der Reihenfolge der Nennung zunehmend bevorzugt mindestens 2500 m²/s², 3000 m²/s², 3500 m²/s², 4000 m²/s², 4500 m²/s² bzw. 5000 m²/s² (mögliche Obergrenzen können bspw. bei höchstens 9000 m²/s², 7000 m²/s² bzw. 6000 m²/s² liegen). Bei einer konventionellen, nicht für einen schnelllaufenden Betrieb ausgelegten Laufschaufel kann An² bspw. rund 1800 m²/s² betragen. Generell ergibt sich An² über die Ringraumfläche, insbesondere am Austritt, multipliziert mit der Drehzahl im ADP-Bereich im Quadrat. Der Aerodynamic Design Point (ADP) ergibt sich unter Cruise Bedingung auf Reiseflughöhe, er zeichnet sich durch ideale Anströmbedingungen und den besten Wirkungsgrad und damit geringsten Verbrauch aus. Bezieht man sich alternativ auf die Umlaufgeschwindigkeit an der Schaufelspitze (radial außen), so kann diese bei einer konventionellen Laufschaufel bspw. bis höchstens 220 m/s reichen, bei einer schnelllaufenden Laufschaufel hingegen mehr als 300 m/s oder sogar 400 m/s betragen.

Die Erfindung betrifft auch ein Turbinenmodul für ein Flugtriebwerk, insbesondere ein Geared-Turbo-Fan-Triebwerk, mit einer vorliegend offenbarten Laufschaufel. Dabei kann das Turbinenmodul insbesondere für einen "schnelllaufenden" Betrieb der Laufschaufel ausgelegt sein, vgl. die Angaben im vorherigen Absatz. Aufgrund der Kopplung über das Getriebe kann das Turbinenmodul im Betrieb schneller als der Fan des Flugtriebwerks drehen (dies meint "schnelllaufend"). Es kann sich bei dem Turbinenmodul bspw. um ein Niederdruckturbinenmodul handeln.

Das Turbinenmodul kann bevorzugt so ausgelegt sein, dass das Außendeckband der Laufschaufel im Betrieb mit einem Kühlfluid gekühlt wird, das nicht durch die Laufschaufel selbst geführt wird. Das Kühlfluid, bspw. Kompressorluft, kann z. B. durch eine der Laufschaufel vorgelagerte Leitschaufel von radial innen nach radial außen geführt und so an das Außendeckband der Laufschaufel gebracht werden. Die mit der Außendeckbandkühlung einhergehende Temperaturverringerung kann bspw. dahingehend von Vorteil sein, dass ein mögliches Deckbandkriechen bzw. Schaufelprofilkriechen reduziert werden kann. Dies kann umgekehrt den Spielraum bei einer Modifikation der Mikrostruktur des Schaufelwerkstoffs vergrößern, also trotz der hochtemperaturfesten Auslegung ein Material mit etwas erhöhter Duktilität erlauben. Generell kann eine Kombination der vorliegend geschilderten Maßnahmen insofern von Vorteil sein, als sie in Summe eine kritische Impact-Energie über das praxisrelevante Anforderungsprofil heben können.

Die Erfindung betrifft auch die Verwendung einer vorliegend offenbarten Laufschaufel oder eines Turbinenmoduls, wobei die Laufschaufel mit einem An² von mindestens 2000 m²/s² rotiert, es wird auf die vorstehenden Angaben verwiesen.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: schematisch ein Mantelstromtriebwerk in einem Axialschnitt;
- Figur 2: schematisch eine Laufschaufel des Triebwerks gemäß Figur 1 in einer Seitenansicht;
- Figur 3: die Laufschaufel gemäß Figur 2 in einer Axialansicht.
- Figur 4: den Zusammenhang zwischen Sehnenlänge S und Radius r;
- Figur 5: die Ermittlung der Sehnenlänge S an einem Querschnittsprofil.

### Bevorzugte Ausführung der Erfindung

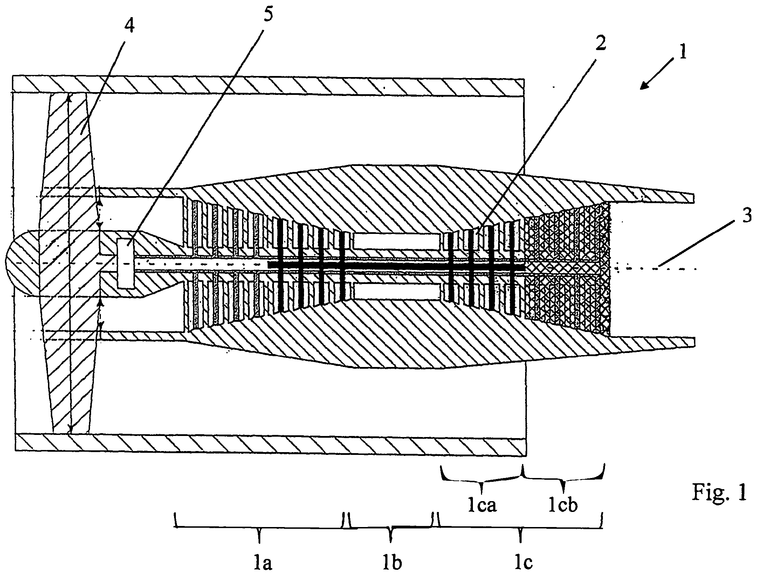

**Figur 1** zeigt eine Strömungsmaschine 1 in schematischer Ansicht, konkret ein Mantelstromtriebwerk. Die Strömungsmaschine 1 gliedert sich funktional in Verdichter 1a, Brennkammer 1b und Turbine 1c, letztere weist ein Hochdruckturbinenmodul 1ca und ein Niederdruckturbinenmodul 1cb auf. Dabei sind sowohl der Verdichter 1a als auch die Turbine 1c jeweils aus mehreren Stufen aufgebaut, jede Stufe setzt sich aus einem Leit- und einem Laufschaufelkranz zusammen. Bezogen auf die Umströmung im Gaskanal 2 ist je Stufe der Laufschaufel- dem Leitschaufelkranz nachgelagert. Im Betrieb rotieren die Laufschaufeln um die Längsachse 3. Der Fan 4 ist über ein Getriebe 5 gekoppelt, die Laufschaufelkränze des Niederdruckturbinenmoduls 1cb rotieren im Betrieb schneller als der Fan 4.

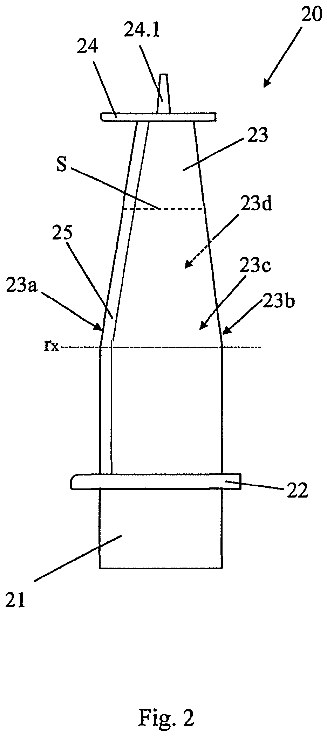

**Figur 2** zeigt eine Laufschaufel 20 in einer schematischen Seitenansicht, und zwar eine Laufschaufel 20 eines Laufschaufelkranzes der Turbine 1c, konkret des Niederdruckturbinenmoduls 1cb. Die Laufschaufel weist einen vorliegend nicht weiter im Einzelnen relevanten Schaufelfuß 21 und radial außerhalb davon eine Innenplattform 22 auf. Von der Innenplattform 22 erstreckt sich das Schaufelblatt 23 nach radial außen. Am radial äußeren Ende des Schaufelblatts 23 ist ein Außendeckband 24 angeordnet, das genau einen Dichtfin 24.1 aufweist. Dies ist hinsichtlich des Gewichts und damit der Randlast von Vorteil, vgl. die Beschreibungseinleitung im Einzelnen.

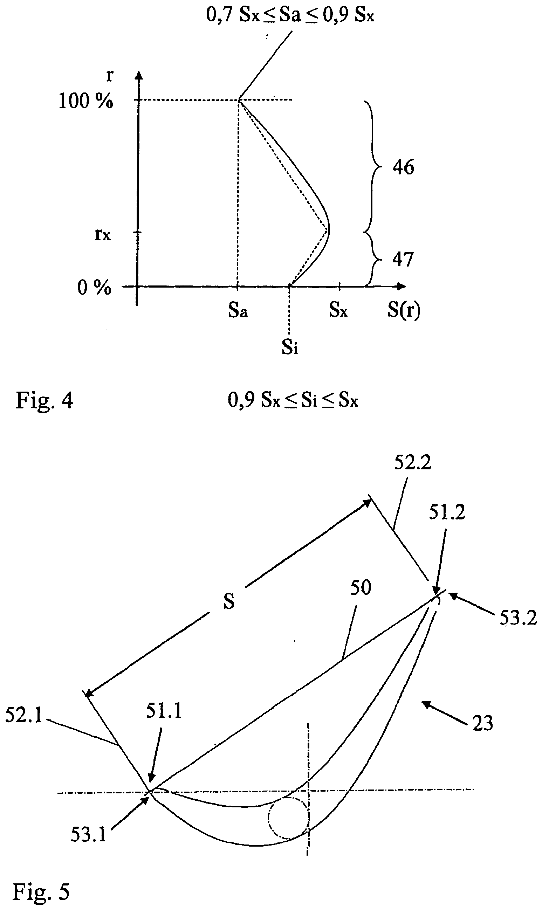

Das Schaufelblatt 23 weist bezogen auf die Umströmung im Heißgaskanal eine Vorderkante 23a, eine Hinterkante 23b, sowie zwei jeweils die Vorder- 23a und die Hinterkante 23b miteinander verbindende Seitenflächen 23c,d auf. Eine der Seitenflächen 23c,d bildet die Saugseite der Laufschaufel 20, die andere die Druckseite. An der Vorderkante 23a ist die Laufschaufel 20 zum Schutz vor Impact-Schäden mit einer Beschichtung 25 versehen, die aus einer metallischen Schicht und einer darauf angeordneten keramischen Schicht aufgebaut ist (die Schichten sind nicht im Einzelnen dargestellt). Aus der Darstellung gemäß Figur 2 ist ferner ersichtlich, dass die schematisch gezeigte Sehnenlänge S von einer Radialposition rₓ weg nach radial außen abnimmt, was ebenfalls die Randlast verringert. Von der Radialposition rₓ nach innen bleibt die Sehnenlänge S konstant oder nimmt sie sogar leicht ab, vgl. Figur 4.

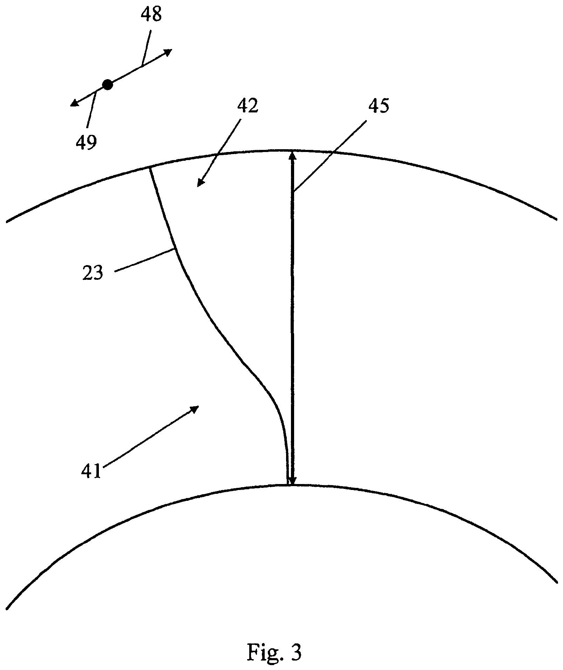

**Figur 3** zeigt das Laufschaufelblatt 23 schematisch in einer Axialansicht, welche die Neigung des Laufschaufelblatts 23 veranschaulicht. In der Darstellung links des Laufschaufelblatts 23 ist dessen Saugseite 41, rechts davon die Druckseite 42. Das Laufschaufelblatt 23 ist zu der Saugseite 41 hin geneigt, und zwar speziell radial mittig, bezogen auf die Laufschaufelblatthöhe 45. Radial innen und radial außen ist die Neigung geringer, das Laufschaufelblatt 23 kann auch gänzlich ohne Neigung in die Nabe bzw. das Gehäuse laufen. Die Neigung zur Saugseite 41 ist dabei so eingestellt, dass das auf das Laufschaufelblatt 23 im Betrieb wirkende Fliehkraft-Biegemoment 48 größer ist als das Gaskraft-Biegemoment 49. Infolgedessen wird das Laufschaufelblatt 23 zu der Druckseite 42 hin gebogen, was die Belastung dort und damit die Impact-Anfälligkeit an der Vorderkante 23a verringert, vgl. auch die Beschreibungseinleitung.

**Figur 4** illustriert den Zusammenhang zwischen der Sehnenlänge S und dem Radius r, angegeben in Prozent der radialen Laufschaufelblatthöhe. Radial innen hat das Schaufelblatt die Sehnenlänge S;, radial außen hat es die Sehnenlänge Sₐ. Auf einer Radialposition rₓ dazwischen hat es die Sehnenlänge Sₓ (die vorliegend ein Maximum darstellt). Die Radialposition rₓ liegt zwischen 20 % und 50 % der radialen Laufschaufelblatthöhe.

In dem radial äußeren Abschnitt 46, also von der Radialposition rₓ nach radial außen, nimmt die Sehnenlänge S ab. Dies verringert die Randlast und erhöht damit die Impact-Toleranz in diesem Bereich. Radial außen liegt die Sehnenlänge Sₐ bei dem 0,7-bis 0,9-Fachen der Sehnenlänge Sₓ.

In dem radial inneren Abschnitt 47 nimmt die Sehnenlänge S nicht nach radial außen ab. Sie kann entweder konstant sein (nicht dargestellt) oder wie in Figur 4 gezeigt sogar nach außen leicht zunehmen, also von der Radialposition rₓ weg nach innen abnehmen. Die Sehnenlänge S; radial innen liegt bei dem 0,9- bis 1-Fachen der Sehnenlänge Sₓ. Die Erfinder haben festgestellt, dass sich in der Gesamtschau gleichwohl keine Einbußen bei der Robustheit ergeben, vgl. die Beschreibungseinleitung im Einzelnen. Andererseits erlaubt die Begrenzung der Sehnenlängen radial innen einen axial kompakteren Aufbau, was bspw. hinsichtlich Gewicht und Effizienz von Vorteil sein kann.

**Figur 5** illustriert das Schaufelblatt 23 in einem Tangentialschnitt. Die Sehnenlänge S wird entlang einer Verbindungstangente 50 genommen, die druckseitig an das Profil gelegt ist und an diesem einen axial vorderen Berührungspunkt 51.1 und einen axial hinteren Berührungspunkt 51.2 hat. Die Sehnenlänge S wird dann zwischen zwei weiteren Tangenten 52.1, 52.2 genommen, die jeweils senkrecht zu der Verbindungstangente 50 liegen, wobei die Tangente 52.1 einen Berührungspunkt 53.1 axial vorne und die Tangente 52.2 einen Berührungspunkt 53.2 axial hinten hat.

### BEZUGSZEICHENLISTE

| | | | |
|---|---|---|---|
| Strömungsmaschine | | | 1 |
| | Verdichter | | 1a |
| | Brennkammer | | 1b |
| | Turbine | | 1c |
| | | Hochdruckturbinenmodul | 1ca |
| | | Niederdruckturbinenmodul | 1cb |
| Gaskanal | | | 2 |
| Längsachse | | | 3 |
| Fan | | | 4 |
| Getriebe | | | 5 |
| Laufschaufel | | | 20 |
| Schaufelfuß | | | 21 |
| Innenplattform | | | 22 |
| Schaufelblatt | | | 23 |
| | Vorderkante | | 23 a |
| | Hinterkante | | 23b |
| Seitenflächen | | | 23c,d |
| Außendeckband | | | 24 |
| | Dichtfin | | 24.1 |
| Beschichtung | | | 25 |
| Sehnenlänge | | | 26 |
| Profilfläche | | | 27 |
| Saugseite | | | 41 |
| Druckseite | | | 42 |
| Laufschaufelblatthöhe | | | 45 |
| Äußerer Abschnitt | | | 46 |
| Innerer Abschnitt | | | 47 |
| Fliehkraft-Biegemoment | | | 48 |
| Gaskraft-Biegemoment | | | 49 |
| Verbindungstangente | | | 50 |
| Vorderer Berührungspunkt | | | 51.1 |
| Hinterer Berührungspunkt | | | 51.2 |
| Weitere Tangenten | | | 52.1,52.2 |
| Berührungspunkte | | | 53.1,53.2 |

## Patentansprüche

1. Laufschaufel (20) zum Anordnen in einem Gaskanal (3) einer Strömungsmaschine (1), mit einen Laufschaufelblatt (23), welches
radial innen eine Sehnenlänge Sᵢ hat,
radial außen eine Sehnenlänge Sₐ hat, und
auf einer Radialposition rₓ dazwischen eine Sehnenlänge Sₓ hat,
wobei die Sehnenlänge Sₓ auf der Radialposition rₓ mindestens so groß ist wie die Sehnenlänge S; radial innen (Sᵢ ≤ Sₓ),
**dadurch gekennzeichnet, dass** die Sehnenlänge Sₐ radial außen höchstens dem 0,9-Fachen der Sehnenlänge Sₓ auf der Radialposition rₓ dazwischen entspricht (Sₐ ≤ 0,9 Sₓ),
wobei ein radialer Verlauf der Sehnenlänge S(r) von der Radialposition rₓ nach radial innen eine monotone Abnahme von Sₓ zu Sᵢ zeigt,
und wobei die Sehnenlänge Si radial innen mindestens dem 0,9-Fachen der Sehnenlänge Sₓ radial dazwischen entspricht (Sᵢ ≥ 0,9 Sₓ).

2. Laufschaufel (20) nach Anspruch 1, bei welcher die Radialposition rₓ mit der Sehnenlänge Sₓ, bezogen auf eine von radial innen nach radial außen genommene Laufschaufelblatthöhe (45), bei mindestens 20 % und höchstens 50 % der Laufschaufelblatthöhe (45) liegt.

3. Laufschaufel (20) nach einem der vorstehenden Ansprüche, bei welcher die Sehnenlänge Sₐ radial außen mindestens dem 0,7-Fachen der Sehnenlänge Sₓ radial dazwischen entspricht (Sₐ ≥ 0,7 Sₓ).

4. Laufschaufel (20) nach einem der vorstehenden Ansprüche, bei welcher ein radialer Verlauf der Sehnenlänge S(r) von der Radialposition rₓ nach radial außen eine monotone Abnahme von Sₓ zu Sₐ zeigt.

5. Laufschaufel (20) nach Anspruch 4, bei welcher die monotone Abnahme von Sₓ zu Sₐ streng monoton ist und einer konstanten Steigung folgt.

6. Laufschaufel (20) nach Anspruch 4, bei welcher die monotone Abnahme von Sₓ zu Sₐ streng monoton ist und einer von der Radialposition rₓ weg nach radial außen zunehmenden Steigung folgt.

7. Laufschaufel (20) nach einem der vorstehenden Ansprüche, bei welcher die monotone Abnahme von Sₓ zu Sᵢ streng monoton ist und einer konstanten Steigung folgt.

8. Laufschaufel (20) nach einem der Ansprüche 1 bis 6, bei welcher die monotone Abnahme von Sₓ zu Sᵢ streng monoton ist und einer von der Radialposition rₓ weg nach radial innen zunehmenden Steigung folgt.

9. Laufschaufel (20) nach einem der vorstehenden Ansprüche, bei welcher das Laufschaufelblatt (23) bezogen auf seine radiale Laufschaufelblatthöhe (45) zumindest abschnittsweise mit einer Neigung zu seiner Saugseite (41) hin vorgesehen ist, wobei die Neigung so eingestellt ist, dass bei einem Betrieb im Aerodynamic Design Point (ADP) ein Fliehkraft-Biegemoment (48), das die Fliehkraft infolge der Neigung auf das Laufschaufelblatt (23) bewirkt, größer ist als ein Gaskraft-Biegemoment (49), das infolge einer Umströmung des Laufschaufelblatts (23) auf das Laufschaufelblatt (23) wirkt.

10. Laufschaufel (20) nach einem der vorstehenden Ansprüche, welche ein radial außen an dem Laufschaufelblatt (23) angeordnetes Außendeckband (24) aufweist, wobei radial außen an dem Außendeckband (24) ein einziger Dichtfin (24.1) angeordnet ist.

11. Laufschaufel (20) nach einem der vorstehenden Ansprüche, bei welcher zumindest das Laufschaufelblatt (23) aus einem hochtemperaturfesten Werkstoff vorgesehen ist.

12. Laufschaufel (20) nach einem der vorstehenden Ansprüche, bei welcher das Laufschaufelblatt (23) zumindest an der Vorderkante (23a) mit einer Beschichtung (25) versehen ist.

13. Laufschaufel (20) nach einem der vorstehenden Ansprüche, die für einen schnelllaufenden Rotor mit, bei einem Betrieb im Aerodynamic Design Point (ADP), einem An² von mindestens 2000 m²/s² ausgelegt ist.

14. Turbinenmodul (1ca,cb) für ein Flugtriebwerk, insbesondere ein Geared-Turbo-Fan-Triebwerk, mit einer Laufschaufel (20) nach einem der vorstehenden Ansprüche, wobei das Turbinenmodul (1ca,cb) dazu ausgelegt ist, einem Außendeckband (24) der Laufschaufel (20) ein Kühlfluid zuzuführen, wobei das Kühlfluid von außerhalb der Laufschaufel (20) zugeführt wird.

15. Verwendung einer Laufschaufel (20) nach einem der Ansprüche 1 bis 13 oder eines Turbinenmoduls (1ca,cb) nach Anspruch 14, bei welcher Verwendung die Laufschaufel (20) bei einem Betrieb im Aerodynamic Design Point (ADP) mit einem An² von mindestens 2000 m²/s² rotiert.

## Claims

1. Rotor blade (20) for arranging in a gas channel (3) of a turbomachine (1), comprising a rotor blade airfoil (23) which
radially on the inside has a chord length Sᵢ,
radially on the outside has a chord length Sₐ, and
at a radial position rₓ inbetween has a chord length Sₓ,
the chord length Sₓ at the radial position rₓ being at least as large as the chord length Sᵢ radially on the inside (Sᵢ ≤ Sₓ),
**characterized in that** the chord length Sₐ radially on the outside corresponds at most to 0.9 times the chord length Sₓ at the radial position rₓ inbetween (Sₐ ≤ 0.9 Sₓ),
a radial progression of the chord length S(r) radially inward from the radial position rₓ exhibiting a monotonic decrease from Sₓ to Sᵢ, and the chord length Si radially on the inside corresponding to at least 0.9 times the chord length Sₓ radially inbetween (Sᵢ ≥ 0.9 Sₓ).

2. Rotor blade (20) according to claim 1, in which the radial position rₓ having the chord length Sₓ, in relation to a rotor blade airfoil height (45) taken from radially inside to radially outside, is at least 20% and at most 50% of the rotor blade airfoil height (45).

3. Rotor blade (20) according to either of the preceding claims, in which the chord length Sₐ radially on the outside corresponds to at least 0.7 times the chord length Sₓ radially inbetween (Sₐ ≥ 0.7 Sₓ).

4. Rotor blade (20) according to any of the preceding claims, in which a radial progression of the chord length S(r) radially outward from the radial position rₓ exhibits a monotonic decrease from Sₓ to Sₐ.

5. Rotor blade (20) according to claim 4, in which the monotonic decrease from Sₓ to Sₐ is strictly monotonic and follows a constant slope.

6. Rotor blade (20) according to claim 4, in which the monotonic decrease from Sₓ to Sₐ is strictly monotonic and follows a slope increasing radially outward away from the radial position rₓ.

7. Rotor blade (20) according to any of the preceding claims, in which the monotonic decrease from Sₓ to Sᵢ is strictly monotonic and follows a constant slope.

8. Rotor blade (20) according to any of claims 1 to 6, in which the monotonic decrease from Sₓ to Sᵢ is strictly monotonic and follows a slope increasing radially inward away from the radial position rₓ.

9. Rotor blade (20) according to any of the preceding claims, in which the rotor blade airfoil (23), at least in portions, is provided with an inclination toward its suction side (41) in relation to the radial rotor blade airfoil height (45) thereof, wherein the inclination is set such that, during operation at the aerodynamic design point (ADP), a centrifugal bending moment (48), which the centrifugal force causes on the rotor blade air airfoil (23) as a result of the inclination, is greater than a gas force bending moment (49) which acts on the rotor blade airfoil (23) as a result of a flow around the rotor blade airfoil (23).

10. Rotor blade (20) according to any of the preceding claims, which comprises an outer shroud (24) arranged radially on the outside on the rotor blade airfoil (23), wherein a single sealing fin (24.1) is arranged radially on the outside on the outer shroud (24).

11. Rotor blade (20) according to any of the preceding claims, in which at least the rotor blade airfoil (23) is made of a high-temperature-resistant material.

12. Rotor blade (20) according to any of the preceding claims, in which the rotor blade airfoil (23) is provided with a coating (25) at least on the leading edge (23a).

13. Rotor blade (20) according to any of the preceding claims, which is designed for a high-speed rotor having an An² of at least 2000 m²/s² when operated at the aerodynamic design point (ADP).

14. Turbine module (1ca,cb) for an aircraft engine, in particular a geared turbo fan engine, comprising a rotor blade (20) according to any of the preceding claims, wherein the turbine module (1ca,cb) is designed to supply a cooling fluid to an outer shroud (24) of the rotor blade (20), wherein the cooling fluid is supplied from outside the rotor blade (20).

15. Use of a rotor blade (20) according to any of claims 1 to 13 or of a turbine module (1ca,cb) according to claim 14, in which use the rotor blade (20) rotates with an An² of at least 2000 m²/s² when operated at the aerodynamic design point (ADP).

## Revendications

1. Aube mobile (20) destinée à être disposée dans un canal de gaz (3) d'une turbomachine (1), comportant une pale d'aube mobile (23), laquelle
comprend radialement à l'intérieur une longueur de corde Sᵢ,
comprend radialement à l'extérieur une longueur de corde Sₐ, et
comprend une longueur de corde Sₓ à une position radiale rₓ entre les deux,
dans laquelle la longueur de corde Sₓ à la position radiale rₓ est au moins aussi grande que la longueur de corde Si radialement à l'intérieur (Sᵢ ≤ Sₓ),
**caractérisée en ce que** la longueur de corde Sₐ radialement à l'extérieur correspond au plus à 0,9 fois la longueur de corde Sₓ à la position radiale rₓ entre les deux (Sₐ ≤ 0,9 Sₓ),
dans laquelle une évolution radiale de la longueur de corde S(r) depuis la position radiale rₓ radialement vers l'intérieur présente une diminution monotone de Sₓ vers Sᵢ, et dans laquelle la longueur de corde Si radialement à l'intérieur correspond au moins à 0,9 fois la longueur de corde Sₓ radialement entre les deux (Sᵢ ≥ 0,9 Sₓ).

2. Aube mobile (20) selon la revendication 1, dans laquelle la position radiale rₓ avec la longueur de corde Sₓ, par rapport à une hauteur de pale d'aube mobile (45) prise depuis l'intérieur radialement vers l'extérieur radialement, est d'au moins 20 % et d'au plus 50 % de la hauteur de pale d'aube mobile (45).

3. Aube mobile (20) selon l'une des revendications précédentes, dans laquelle la longueur de corde Sₐ radialement à l'extérieur correspond au moins à 0,7 fois la longueur de corde Sₓ radialement entre les deux (Sₐ ≥ 0,7 Sₓ).

4. Aube mobile (20) selon l'une des revendications précédentes, dans laquelle une évolution radiale de la longueur de corde S(r) depuis la position radiale rₓ radialement vers l'extérieur présente une diminution monotone de Sₓ vers Sₐ.

5. Aube mobile (20) selon la revendication 4, dans laquelle la diminution monotone de Sₓ vers Sₐ est strictement monotone et suit une pente constante.

6. Aube mobile (20) selon la revendication 4, dans laquelle la diminution monotone de Sₓ vers Sₐ est strictement monotone et suit une pente croissante radialement vers l'extérieur en s'éloignant de la position radiale rₓ.

7. Aube mobile (20) selon l'une des revendications précédentes, dans laquelle la diminution monotone de Sₓ vers Sᵢ est strictement monotone et suit une pente constante.

8. Aube mobile (20) selon l'une des revendications 1 à 6, dans laquelle la diminution monotone de Sₓ vers Sᵢ est strictement monotone et suit une pente croissante radialement vers l'intérieur en s'éloignant de la position radiale rₓ.

9. Aube mobile (20) selon l'une des revendications précédentes, dans laquelle la pale d'aube mobile (23) est prévue, par rapport à sa hauteur radiale de pale d'aube mobile (45), au moins dans certaines sections avec une inclinaison vers son côté aspiration (41), dans laquelle l'inclinaison est réglée de telle sorte que, lors d'un fonctionnement au point de conception aérodynamique (ADP), un moment de flexion de force centrifuge (48) que la force centrifuge provoque sur la pale d'aube mobile (23) en raison de l'inclinaison est supérieur à un moment de flexion de force du gaz (49) qui agit sur la pale d'aube mobile (23) en raison d'un écoulement autour de la pale d'aube mobile (23).

10. Aube mobile (20) selon l'une des revendications précédentes, laquelle présente une bande de recouvrement extérieure (24) disposée radialement à l'extérieur sur la pale d'aube mobile (23), dans laquelle une seule pointe d'étanchéité (24.1) est disposée radialement à l'extérieur sur la bande de recouvrement extérieure (24).

11. Aube mobile (20) selon l'une des revendications précédentes, dans laquelle au moins la pale d'aube mobile (23) est prévue en un matériau résistant aux hautes températures.

12. Aube mobile (20) selon l'une des revendications précédentes, dans laquelle la pale d'aube mobile (23) est pourvue d'un revêtement (25) au moins sur le bord d'attaque (23a).

13. Aube mobile (20) selon l'une des revendications précédentes, conçue pour un rotor à grande vitesse comportant, lors d'un fonctionnement au point de conception aérodynamique (ADP), une valeur An² d'au moins 2000 m²/s².

14. Module de turbine (1ca, cb) pour un moteur d'aéronef, en particulier un moteur turboréacteur à double flux à réducteur, comportant une aube mobile (20) selon l'une des revendications précédentes, dans lequel le module de turbine (1ca, cb) est conçu pour amener un fluide de refroidissement à une bande de recouvrement extérieure (24) de l'aube mobile (20), dans lequel le fluide de refroidissement est amené depuis l'extérieur de l'aube mobile (20).

15. Utilisation d'une aube mobile (20) selon l'une des revendications 1 à 13 ou d'un module de turbine (1ca, cb) selon la revendication 14, utilisation lors de laquelle l'aube mobile (20) tourne à une valeur An² d'au moins 2000 m²/s² lors d'un fonctionnement au point de conception aérodynamique (ADP).
